# EUROPEAN PATENT APPLICATION

(11) **EP 0 529 072 A1**
(43) Date of publication of application: **03.03.1993**
(21) Application number: 90905638.4
(22) Date of filing: 30.03.1990
(51) Int. Cl.: E04F 15/024, H02G 3/28

(54) **FLOOR PANEL AND DEVICE FOR CONNECTING FLOOR PANEL**

(71) Applicant: NAKA CORPORATION, Chiyoda-ku, Tokyo (JP)
(72) Inventor: NAKA, Hiromasa, Naka Corporation, Chiyoda-ku, Tokyo 100 (JP); OKUSHIMA, Takehiko, Naka Technical Laboratory, Chiyoda-ku, Tokyo 100 (JP); OKUMURA, Takao, Naka Technical Laboratory, Chiyoda-ku, Tokyo 100 (JP); SHOJI, Tatsuo, Naka Technical Laboratory, Chiyoda-ku, Tokyo 100 (JP); TOBIKAWA, Tetsuo, Naka Technical Laboratory, Chiyoda-ku, Tokyo 100 (JP); NAKAMURA, Norio, Naka Corporation, Chiyoda-ku, Tokyo 100 (JP)
(74) Representative: Spall, Christopher John
(86) International application number: JP9000435
(87) International publication number: WO9115641

(57) **Abstract**

A connecting member (1) of a floor panel (2) clamps the corner (2a) of each floor panel between its integral flange portion (1b) and leg portion (1C) and has a rise portion (1d) meshed with an anchor groove of each floor panel. Since the connecting member connects mutually a plurality of floor panels, it prevents the floating of the floor panels when a horizontal load act on them. A fixing metal (8) has slits (9) having the shape capable of meshing with support legs (6) of a plurality of floor panels laid down on the floor surface. Accordingly, positioning and fixing can be made easily while laying down the floor panels. Furthermore, the pheripheral portions of the upper surface sheets of the floor panels are pressed while encompassing the pheripheral portions of the lower surface sheets and a plurality of caulking are made there. Moreover, the lower surface sheets and the upper surface sheets are coupled at predetermined positions inside the plane and an inorganic filler is packed into the hollow portions between the upper and lower surface sheets. Accordingly, the floor panels are light in weight but have sufficient strength.

## Description

### FIELD OF THE INVENTION:

The present invention relates to floor panels for defining a double floor, and a device for connecting the floor panels.

### BACKGROUND OF THE INVENTION:

Well-known in the art is a double floor construction i.e. a free access floor for defining a space between a base floor such as a concrete floor of the buildings and floor panels supported above by means of supporting legs extending therefrom for passing ventilating ducts and/or lines such as cables or wirings from electronic equipments to be installed on the floor panels.

Although the free access floor produced from a plurality of floor panels laid on the base floor and connected with each other is advantageous in that it can be constructed at relatively low cost and the laying operation can be executed easily, such free access floor is disadvantageous in resisting the effect of earthquake. In other words, the offsetting of the opposite edges of the adjacent floor panels due to the horizontal load related to as Jack-knife effect can not be avoided. Further, when horizontal load is exerted on one of the floor panels, the staggering of the opposite edges of the adjacent floor panels related to as Jack-knife phenomenon is occurred, this is because an angular moment is produced by the difference between the exerting direction of the horizontal load and the supporting direction of the horizontal load. The Jack-knife phenomenon is apt to occur between the floor panel connected to the wall or secured by a fixing metal to the base floor and its adjacent floor panel, or between floor panels staggered with each other because of its manufacturing tolerance.

It has previously been proposed in the art to utilize fixing metals for eliminating the horizontal displacement of the floor panels. Such fixing metals are of a plate like member having engaging holes to each of which the lower end of the supporting legs depending from the plurality of floor panels are to be inserted simultaneously. These fixing metals are adapted to be installed preliminarily on the base floor at the predetermined position defined by setting-out lines. Alternatively, it is necessary to remove the preliminary laid floor panels before installing the fixing metals, the fixing metals are then installed by engaging the supporting legs with holes of the fixing metal, and securing the legs to the holes. In either case, installing operation of the fixing metal has been time-consuming and cumbersome.

The examples of the prior art floor panels known are a floor panel consist of a grate shaped stiffening rib die-casted of alminium, a floor panel formed of GRC, a floor panel formed of a particle board, a floor panel in which a lower surface sheet of rolled steel sheet having grate shaped ribs formed by press forming is spot welded to an upper surface sheet of rolled steel sheet, and a floor panel in which a particle board or a reinforced concrete panel is sandwiched between steel sheets, etc. However, the floor panel of die-casted alminium has disadvantages that such floor panel is expensive in its manufacture, and noisy when walking thereon. The floor panel including stiffening ribs has an disadvantage that the stiffening ribs increase the thickness of the floor panel, and the finished height of the double floor construction is thus increased. In the floor panel of GRC, glass fibers are often insufficiently spreaded over the peripheral edge thereof, so that the strength of such floor panel is also insufficient. In the floor panel of a particle board, the only way to increasing the strength thereof is to increase the thickness thereof. The floor panel of rolled steel sheets can be deformed easily, since the stiffness thereof is insufficient, and this floor panel is noisy when walking thereon. In the floor panel made by sandwiching a particle board or a reinforced concrete panel between steel sheets is heavy in its weight, and thus different in installing thereof, and expensive in its manufacture.

### SUMMARY OF THE INVENTION:

The object of the present invention is to provide a connecting structure of floor panels eliminating the possibility of occurring the Jack-knife phenomenon of the floor panels due to the horizontal load to be exerted on the floor panels. These floor panels present an excellent earthquake-resistant capability by connecting a plurality of floor panels at their corners using a connecting member which can be manipulated easily from the above.

Another object of the present invention is to provide a fixing metal for securing floor panels effecting the positioning and securing of the floor panels simultaneously, without requiring centering operation such as the setting out operation upon laying floor panels on the base floor.

Further object of the present invention is to provide a floor panel light in weight, having a sufficient strength, and easy to manufacture for reducing the cost involved in the laying operation.

Above mentioned object can be achieved according to the present invention by a system for connecting a plurality of floor panels laid down on a base floor at the junction of these panels by means of a connecting member, said floor panel has a supporting leg at each corner thereof, characterized in that said plurality of floor panels are interconnected by clamping the corners thereof between flange portions and legs integrally formed with said connecting member, and engaging rise portions of the legs with the retaining portion of each floor panel.

A fixing metal of the present invention for securing supporting legs of a plurality of gathered floor panels laid on a base floor simultaneously at the junction of these panels characterized in that said fixing metal has at each side thereof a slit, the one end of each slit is opened at respective side edge of the fixing metal, the configuration of said slit allows the engagement of the slit with the supporting leg of the floor panels laid on the base floor.

Further, a floor panel of the present invention comprising an upper and lower surface sheets wherein said sheets are connected by bending a peripheral edge portion of said upper sheet over the peripheral edge portion of the lower sheet so as to surround the peripheral edge portion of the lower sheet, pressed these edge portions together, and then plurality of caulking operations are effected thereon, wherein an apex of each raised portion formed on the lower surface sheet is connected to connecting portions of said upper sheet, and wherein the hollow space defined between the upper and lower surface sheets and is filled with the inorganic filler.

The floor panel of the present invention is provided with an opening or cut-out portion at the peripheral edge thereof, and a closure plate is detachably connected to the opening.

### BRIEF DESCRIPTION OF THE DRAWINGS:

The invention is explained in more detail below with reference to the graphically represented illustrative embodiments of the floor panels and the connecting member, in which:
Figure 1 shows a perspective view of the floor panels connected by means of a connecting member and a fixing plate of the present invention;
Figure 2 shows a partially breaking away perspective view illustrating how the floor panels are connected by means of connecting member;
Figure 3 shows a cross-sectional view taken along the section line A-A of Figure 2;
Figure 4 shows a bottom plan view of the floor panels connected by means of the connecting member;
Figure 5 shows a cross-sectional view taken along the section line B-B of Figure 4;
Figure 6 shows a perspective view illustrating the bottom of the corner of the floor panel;
Figure 7 shows a perspective view of the floor panels connected by means of a connecting member in accordance with the another embodiment of the present invention;
Figure 8 shows a plan view illustrating the free access floor defined by the floor panels connected by means of the connecting member and the fixing plate of the present invention;

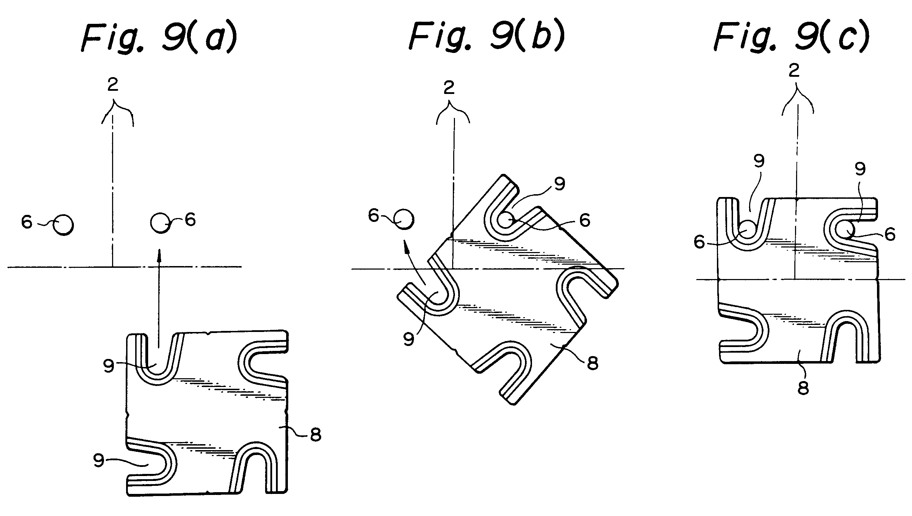

Figures 9(a), 9(b), and 9(c) are illustrations designating the steps for connecting the fixing metal to the supporting legs;
Figure 10 shows a cross-sectional view of the floor panel of the present invention;
Figure 11 shows an enlarged cross-sectional view of the peripheral edge portion of the floor panel;
Figure 12 shows an enlarged cross-sectional view of the peripheral edge of the floor panel illustrating the direction of the load to be applied thereto;
Figure 13 shows an enlarged cross-sectional view of the raised portion;
Figure 14 shows a bottom plan view of the floor panel; and
Figure 15 shows the free access floor defined by the floor panels of the present invention;

### BEST MODE FOR CARRYING OUT THE INVENTION:

An preferred embodiment of the invention will now be described with reference to the attached drawings.

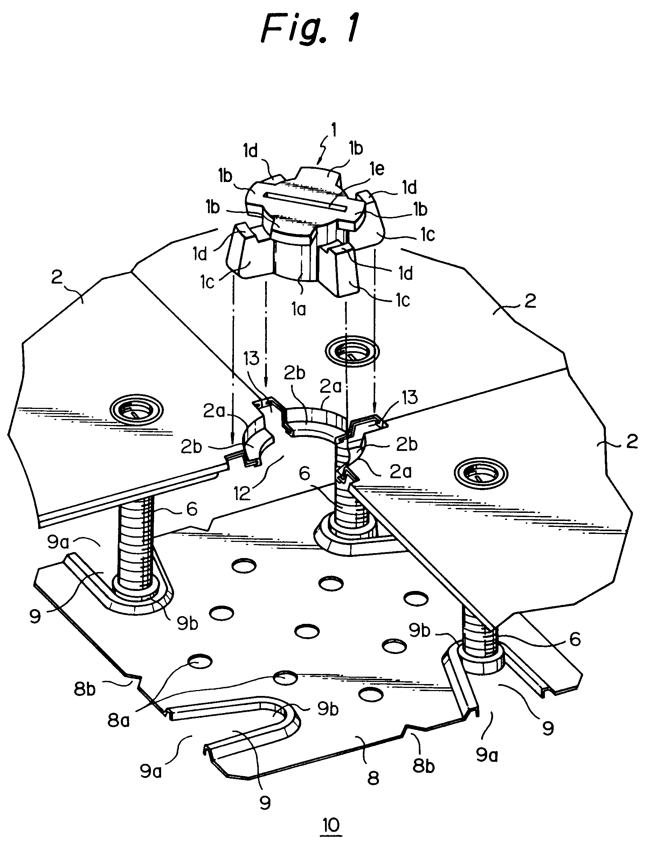

As can be seen from Fig. 1, floor panels 2 of the present invention are adapted to be connected with each other at their corner by means of connecting member 1. Supporting legs 6 of the floor panels are adapted to be engaged with each slit 9 of fixing metal 8 secured on the base floor 10.

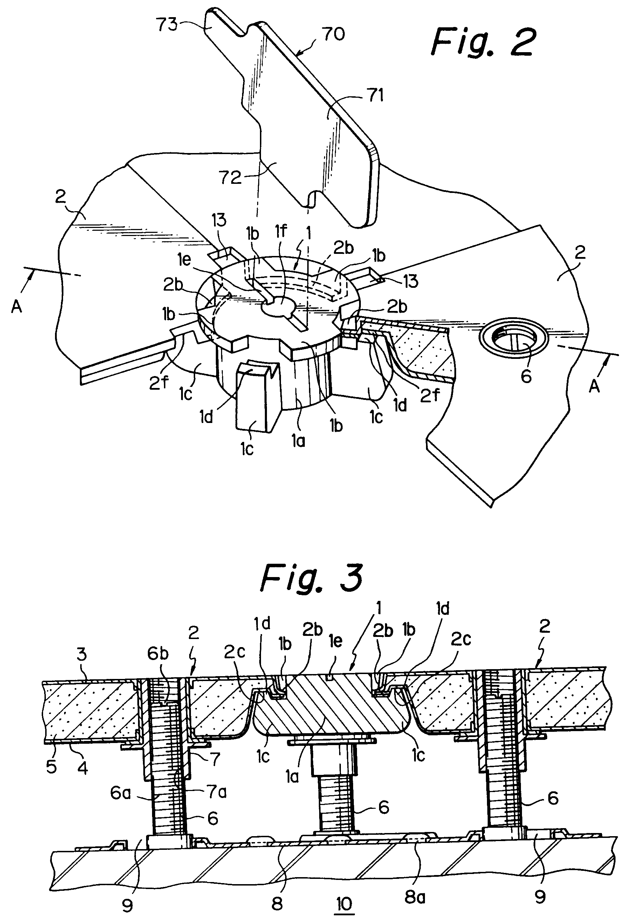

The connecting member 1 formed preferably of molded resinous material has a cylindrical body 1a having at the top end thereof a plurality of flange portions 1b and at the lower portion thereof a plurality of outwardly extending legs 1c. The separate flange portions allow an easy elastic deformation thereof. The legs are separated with each other at an angle of 90°. An upper end of each leg 1c is cut-out at the side adjacent the outer wall of the body to form an upwardly extending rise portion 1d. The connecting member 1 further includes at the top surface thereof a slot 1e for accommodating a tip of a tool for turning the connecting member, e.g. a screwdriver. An example of the tool to be utilized in this embodiment is shown as a jig plate 70 (see Fig. 2) for effecting both turning and raising the member 1. The jig 70 has at its one side an engaging tip portion 72 to be engaged with the slot portion 1e of the member 1, and at its one of other sides an withdrawing tip portion 73 to be inserted into an inserting hole 1f of the member 1.

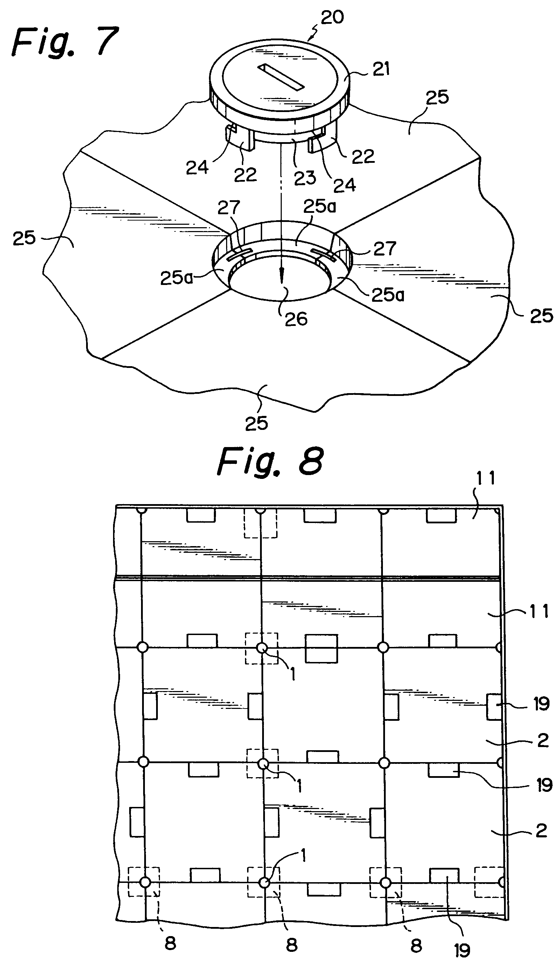

Referring now to Fig. 7, an alternative embodiment of the connecting member is shown. In this embodiment, connecting member 20 includes a flange portion 21, legs 22 depending from the flange, each legs has a cut-out portion 24 at the junction with the flange, and a downwardly extending column portion 24. A through bore 26 defined by a plurality of floor panels 25 has an inwardly extending step portion 25a in which a plurality of openings 27 are provided. The floor panels are connected with each other by inserting the column 24 into the bore 26 and inserting at the same time the legs 22 into the openings 27, and the turning the member 20 to engage the member with each panels. The function to be obtained from this embodiment is substantially identical with that mentioned above.

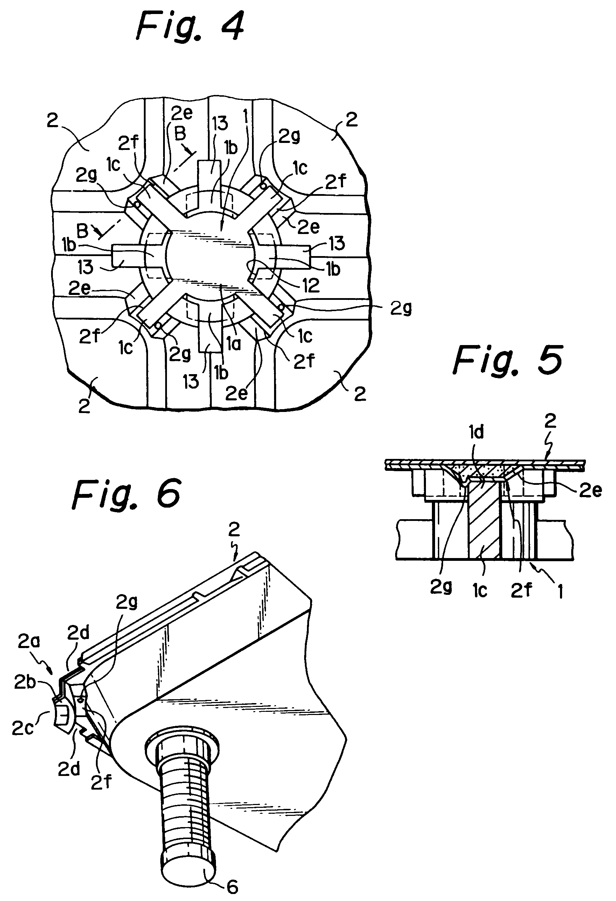

As can be seen from Fig. 3, the floor panel 2 is a square shaped member in which top panel 3 and bottom panel 4 are connected with each other to define a hollow space therebetween. The hollow space is filled with inorganic filler 5 such as mortar. An internally threaded tubular member 7 is press fitted at each corner of the panel 2 for receiving an externally threaded supporting leg 6. Thus, the height control of the panel 2 can be made only by turning the leg 6 with respect to the tube 7. At each corner end of the floor panel 2 is provided with a quadrant shaped step 2b and a shelf-like protrusion having a cut-out 2c of the shape similar to the step, so that a stepped bore 8 can be defined by gathering the corners of four panels 2. Further, each side of the panel is provided at both end with a cut-out 2d for defining a slot 13 (see Figs. 2 and 4), through which one of the legs of the member can be passed. As shown in Figs. 4 and 5, at the bottom of each corner of the panel is shaped to have a ramp 2e for guiding the leg, a retaining portion 2f, and a stop 2g. The details of the structure the bottom of each corner of the floor panel will be described in detail hereinafter.

The fixing metal 8 is formed of a planer square plate having at each side thereof a U-shaped slit 9 defining an opening 9a. The U-shape of the slit is divergent toward the edge of the plate. The rim surrounding the slit is substantially channel shaped in its cross-section. Thus, when floor panels 2 connected by means of connecting member 1 are inadvertenly urged in a direction parallel to one of the slits 9, the stress which tends to disengage the floor panels from the plate exerted through three supporting legs 6 to the plate will be supported by remaining three slits. This is because the direction of each slit is different from one another. Thus, displacing of the floor panels can be avoided. The fixing metal 8 is adapted to be secured to the base floor 10 by filling a plurality of perforations 8a with an adhesive. Thus, the possibility of displacing the fixing metals can be eliminated. That designated generally by reference numeral 8b is a notch to be utilized in aligning the side of the metal with a setting-out line provided on the base floor.

When floor panels 2 are assembled by means of connecting member 1, flange portions 1b of the connecting member will be engaged with the step 2b, and at the same time the upper surfaces of the cut-outs of the legs 1c is urged to the bottom surface of the floor panels and the rise portions 1d are also engaged with the retaining portions 2f. When turning the member 1, the rise portion 1d is guided through the ramp 2e to the retaining portions 2f, and then stopped by abutting with the stop 2g and maintained at a position on the retaining portions 2f. In this condition, the legs 1c are deformed elastically so that the rise portions 1d thereof are urged against the retaining portions 2f. The spring force due to the elastic deformation of the legs enhances the clamping force to be obtained by the connecting member 1. Further, the spring force allows the floor panels to be clamped with remaining substantially no spaces between panels. Thus, the offsetting of the opposite edges of the adjacent floor panels due to the horizontal load related to as Jack-knife effect can be avoided. Further, the displacement of the floor panels due to the horizontal load is also avoided by the engagement of the rise portions 1d of the connecting member 1 with the retaining portion 2e of the floor panels 2.

The horizontal displacement of the floor panels on the base floor can be avoided by retaining adjacent four supporting legs 6 of four panels 2 stationary by means of the fixing metal 8 with maintaining the lower end of the legs 6 at the deepest portion 9b of the slit 9 of the fixing metal 8.

In the above described connecting structure, a free access floor enhanced in its integrality and excellent in aseismatic capacity can be provided. In thus obtained connecting structure, loosening and removing of the connecting member can be avoided. Further, the connecting structure effectively reduce the difference in level between adjacent floor panels 2.

The fixing metal 8 of the present invention can be positioned with engaging each slit 9 thereof with the supporting legs 6 of the floor panels 2 while laying the floor panels. In other words, the fixing metals 8 can be secured on the base floor 10 under the condition the floor panels 2 are laid on the base floor 10, so that the laying and securing of the fixing metals can be easily made.

The structure of the floor panels will now be described. An upper surface sheet 3 of generally square configuration has a plurality of connecting portions 31 to which the raised portions 30 of a lower surface sheet 4 are adapted to be connected. The lower surface 4 is formed to have a trough shape having a bottom portion 34 and outwardly inclined side wall 33 extending therefrom. The raised portions 30 of hemispherical shape are provided at the predetermined positions on the bottom portion 34. The apex 35 of the raised portion 30 is formed to protrude so as to abut against the connecting portions 31 of the upper surface sheet 3.

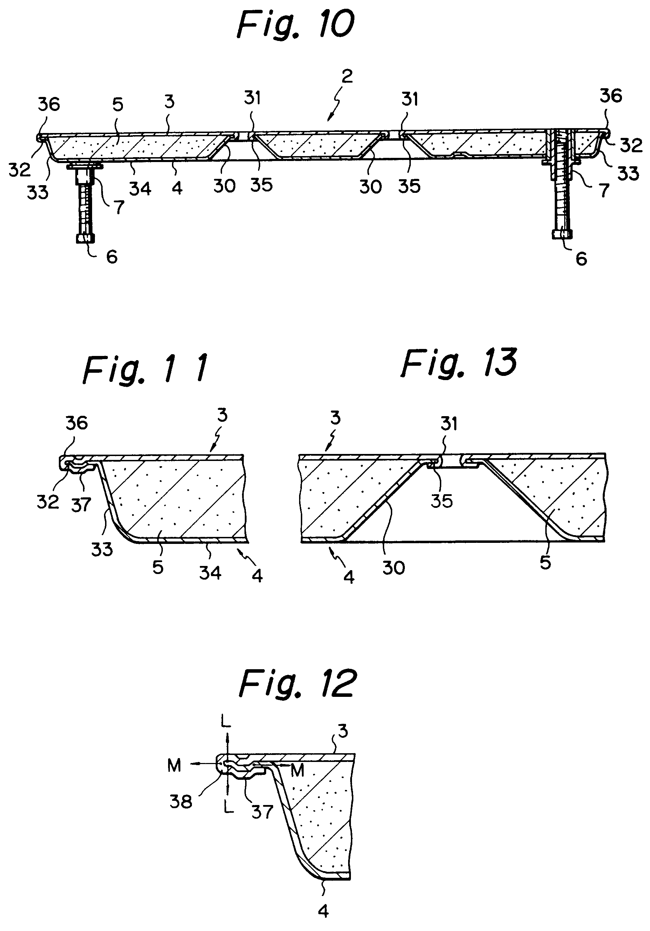

The upper and lower surface sheets 3 and 4 are secured by placing the upper sheet 3 on the lower sheet 4, bending the peripheral edge portion 36 of the upper sheet 3 over the peripheral edge portion 32 of the lower sheet 4, and pressing these edge portions together to form a horizontally extending outer edge of the floor panel. Caulking operations are effected on the predetermined positions on the outer edge of the floor panel to form caulking points 37. As can be seen from the above, the force to be applied in either direction of arrows L (see Fig. 12) is constrained by a base portion 38 of the outer edge, so that the pressed together portion i.e. the outer edge of the floor panel can not be opened by the load exerted upwardly or downwardly on the lower surface sheet 4. The horizontal displacement of the upper and lower surface sheets 3 and 4 in the direction of arrows M (see Fig. 12) is also constrained by the caulking points 37. The possibility of separating the peripheral edge portion 32 of the lower sheet 4 off from the peripheral edge portion 36 of the upper sheet 3 can be eliminated (see Fig. 3). The raised portions 30 of the lower surface sheet 4 are adapted to be connected to the upper surface sheet 3 by caulking the apex 35 to the connecting portions 31. The hollow space defined between the upper and lower surface sheets 3 and 4 is filled with the inorganic filler 5 composed of mortar delivered thereto under pressure. Inorganic filler 5 takes the shape similar to a beam along the peripheral edge of the floor panel 2, and the thickness of the filler material at the corner 2a is greater than the other area.

Further, as mentioned above, a quadrant shaped step 2b and a shelf-like protrusion having cut-out 2c of the shape similar to the step are provided at each corner end of the floor panel 2, and the bottom of each corner of the panel is provided with the retaining portion 2f. The externally threaded supporting leg 6 is threadingly engaged with the internally threaded tubular member 7 press fitted at each corner of the panel 2, so that the height control of the panel 2 can be effected by turning the leg 6 with respect to the tube 7.

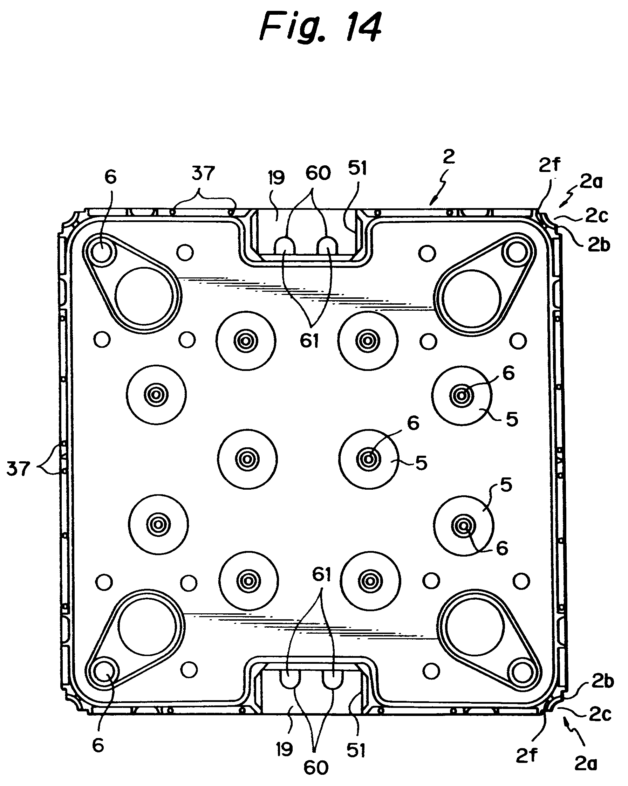

A closure plate detachably connected to each opening 51 of the floor panel 2 is designated generally by reference numeral 19 (see Figs. 8, 14, and 15), through which lines such as cables or wiring from electronic equipments to be installed on the floor panels 2 are passed. The closure plate 19 is provided with a blank or blanks 61 surrounded by U-shaped groove 60. While cable or cables are intended to be passed through the blank, one can easily make a U-shaped opening through the closure plate 19 only by punching any one blank at the desired position out. Of course, while larger amount of cables are intended to be passed, one can easily satisfy such an intension by removing the closure panel 19 to provide an opening 51.

Thus, in the above described floor panel construction, openings for the cables can be made at the desired position, so that the floor panel construction can accommodate the increasing number of electronic equipments to be installed on the floor panels and/or the modification of the layout thereof.

The displacement between the upper and lower surface sheets 3 and 4 and the detachment of these sheets due to the load exerted on the floor panel can be avoided, as the floor panel 2 of the present invention is formed by press working the peripheral edges of the upper and lower surface sheets 3 and 4 together and then caulking thus obtained outer edge of the floor panel to form a plurality of caulking points 37. The possibility of causing the problem on the demensional accuracy is also reduced. Further, the outwardly inclined wall 33 forming the side wall of the floor panel 2 allows the breakage risk raised upon the press working of the material and the decreasing of the demensional accuracy of the floor panel to be eliminated. Inorganic filler 5 taking the shape similar to a beam along the peripheral edge of the floor panel 2, and the filler material at the corner 2a thicker than the other area provides a floor panel 2 light in its weight and having sufficient strength. Further, a sound generated by the walking can be reduced by a sound deadening effect to be obtained from inorganic filler 5.

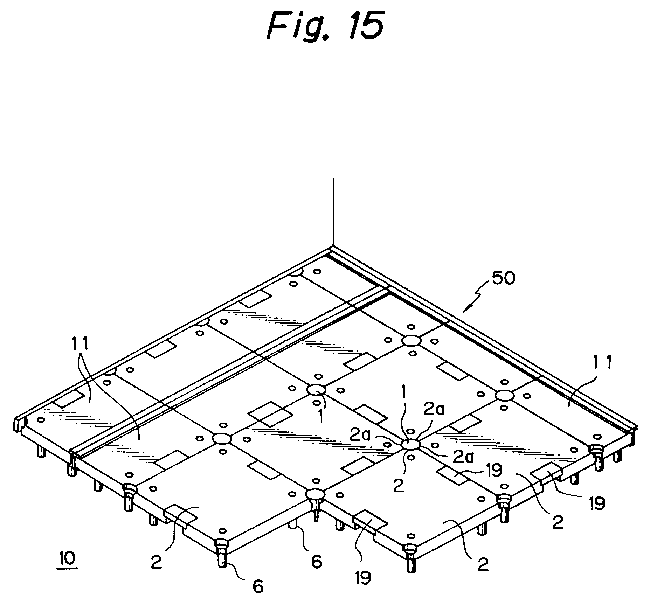

As can be seen from Fig. 15, the free access floor 50 is provided by laying a plurality of floor panels 2 on the base floor 10 and connecting the floor panels at corners 2a by means of connecting member 1. The space remained along the wall of the room can be filled up by laying fragmentary floor panels 11 cut to the desired size.

We will now explain the process for laying the free access floor 50 on the base floor 10. At first, floor panels 2 are disposed on the base floor in side-by-side relation with each other, one of the supporting legs of the floor panels is engaged with one of the slits of the fixing metal 8 and then turned the metal 8 about the one leg to engage the other slit adjacent the one slit with the other supporting leg adjacent to the one leg (see Figs. 4(a), 4(b), and 4(c)). The fixing metal 8 positioned in such a manner is then secured on the base floor by any suitable means such as adhesive. It is not necessary to engage all supporting legs with the fixing metals 8, since the floor panels are connected integrally by means of the connecting members 1. In other words, the laying of the fixing metals 8 are effected taking into account the area of the base floor and/or the key point or points at which displacement of the floor panels should especially be avoided.

The height control of each panels are effected by turning the supporting legs 6 by a screwdriver at the same time of laying the floor panels. The four adjacent panels gathered to define a through bore 12 at the junction thereof are connected by inserting the connecting member 1 to the through bore 12 with passing the legs 1c thereof through the slot 13, and then turning the connecting member 1 through a predetermined angle (e.g. 45°) by jig plate 70 inserted to the slot 1e. In this condition, turning of the connecting member 1 is stopped by the abutment of the rise portions 1d of the legs 1c with the stop 2g, and the rise portions are remained engaged with the retaining portion 2f.

As can be seen from the above, the free access floor according to the present invention can be easily mounted on the base floor, and is excellent in its maintenance feature at the changing of the route of the cable and/or the checking thereon, since the connecting member 1 can be operated from the above, and the fastening operation thereof can be made by turning only through a predetermined angle (45°) and instantaneous attachment and removing thereof can also be made.

## Claims

1. A system for connecting a plurality of floor panels laid down on a base floor at the junction of these panels by means of a connecting member, said floor panel has a supporting leg at each corner thereof, characterized in that said plurality of floor panels are interconnected by clamping the corners thereof between flange portions and legs integrally formed with said connecting member, and engaging rise portions of the legs with the retaining portion of each floor panel.

2. A system for connecting floor panels as claimed in Claim 1, wherein each of said supporting legs is threadingly engaged with an internally threaded tubular member press fitted at each corner of said panel, and the supporting legs disposed in said member can be adjusted in a vertical direction.

3. A system for connecting floor panels as claimed in Claim 1 or 2, wherein said plurality of floor panels are connected by means of said connecting member by inserting said connecting member into a through bore defined at said junction of said plurality of floor panels, and then turning said connecting member by a tool to be engaged with a slot formed on the top surface of the connecting member.

4. A fixing metal for securing simultaneously supporting legs of a plurality of gathered floor panels laid on a base floor at the junction of these panels characterized in that said fixing metal has at each side thereof a slit, the one end of each slit is opened at respective side edge of the fixing metal, the configuration of said slit allows the engagement of the slit with the supporting leg of the floor panels laid on the base floor.

5. A fixing metal for securing floor panels as claimed in Claim 4, wherein the slit of said fixing metal is engaged with each supporting leg of each of a plurality of floor panels laid on said base floor.

6. A floor panel comprising an upper and lower surface sheets wherein said sheets are connected by bending a peripheral edge portion of said upper sheet over the peripheral edge portion of the lower sheet so as to surround the peripheral edge portion of the lower sheet, pressed these edge portions together, and then plurality of caulking operations are effected thereon, wherein an apex of each raised portion formed on the lower surface sheet is connected to connecting portions of said upper sheet, and wherein the hollow space defined between the upper and lower surface sheets and is filled with inorganic filler.

7. A floor panel as claimed in Claim 6, wherein an opening or cut-out portion is provided through an edge portion of said floor panel, and a closure plate is detachably connected thereto.

8. A floor panel as claimed in Claim 7, wherein said closure plate has an opening or openings for passing cables therethrough, the opening or openings are made by punching a blank attached thereto.
